Europäisches Patentamt

European Patent Office

Office européen des brevets

(11) Numéro de publication: **0 380 389**
**A1**

# DEMANDE DE BREVET EUROPEEN

(21) Numéro de dépôt: **90400130.2**

(51) Int. Cl.5: **C08G 18/65**

(22) Date de dépôt: **17.01.90**

(30) Priorité: **19.01.89 FR 8900600**

(43) Date de publication de la demande:
**01.08.90 Bulletin 90/31**

(84) Etats contractants désignés:
**AT BE CH DE DK ES FR GB GR IT LI LU NL SE**

(71) Demandeur: **SOCIETE INDUSTRIELLE
D'APPLICATIONS NOUVELLES DE
PROCEDES DE MOULAGES INDUSTRIELS
(SAMI)
Route de Pinson
F-45330 Malesherbes(FR)**

(72) Inventeur: **Pascault, Jean-Pierre
40, rue Château Gaillard
F-69100 Villeurbanne(FR)**
Inventeur: **Cuve, Léon
5, rue Moissonnier
F-69003 Lyon(FR)**

(74) Mandataire: **Warcoin, Jacques et al
Cabinet Régimbeau 26, avenue Kléber
F-75116 Paris(FR)**

(54) **Composition de polymère d'uréthane et préparation d'articles à partir de ces polymères.**

(57) La présente invention concerne une composition de polymère d'uréthanne, caractérisée en ce qu'elle contient :
- un oligomère $\alpha,\omega$-diol,
- un isocyanate,
- un diol allongeur de chaîne, et
- un agent émulsifiant qui est le produit de réaction entre :
    (a) un oligomère $\alpha,\omega$-diol dont la structure de la chaîne est d'une polarité identique ou voisine de celle de l'oligomère $\alpha,\omega$-diol précédent,
    (b) un diisocyanate, et éventuellement
    (c) un allongeur de chaîne de type diol ou monoalcool tel un polyoxyde d'éthylène monofonctionnel.
Elle concerne également un procédé de préparation d'articles à partir de cette composition et les articles moulés ainsi obtenus.

EP 0 380 389 A1

# COMPOSITION DE POLYMERE D'URETHANNE ET PREPARATION D'ARTICLES A PARTIR DE CES POLY-MERES

La présente invention se rapporte à une composition de polymère d'uréthanne.

Le terme polyuréthanne est couramment utilisé pour désigner une large variété de matériaux polymères incluant aussi bien les élastomères réticulés et les élastomères thermoplastiques que des peintures, des adhésifs, des pièces moulées. Il s'agit d'un terme de convention qui s'applique aux macromolécules comportant dans le motif de répétition la fonction uréthanne - N - C -O-.
$$\begin{array}{cc} | & || \\ H & O \end{array}$$

Les polymères d'uréthanne sont donc constitués par des séquences souples, chacune de celles-ci étant constituées par un macrodiol oligomère α,ω- hydroxylé et par des séquences rigides issues de la réaction entre un diisocyanate et un allongeur de chaîne.

Les propriétés des polymères d'uréthanne résultent en fait de leur caractère microhétérophasé (taille de l'ordre de la centaine d'Angströms) dû à l'incompatibilité thermodynamique entre ces séquences souples et ces séquences rigides.

En conséquence, la méthode de polycondensation utilisée en agissant sur la morphologie influence les propriétés finales des compositions de polymère d'uréthanne ainsi obtenues.

Ainsi, lorsque l'on réalise la polycondensation non en solution, mais en masse selon l'objectif industriel, un phénomène de macroséparation de phase, (taille des phases de l'ordre du micron) se superpose au phénomène de microséparation de phase inhérent à la structure du polymère d'uréthanne. Les matériaux obtenus présentent alors une grande polymolécularité avec la présence de segments rigides isolés.

La polycondensation en masse de polymère d'uréthanne à base d'oligomère α,ω-diol non polaire donne le cas d'immiscibilité le plus marqué. Dans ce cas, l'ajout d'un diol en tant qu' allongeur de chaîne lors de la deuxième étape de la polycondensation induit une macroséparation de phase immédiate du fait de l'incompatibilité thermodynamique des réactifs. Par exemple, la synthèse en masse de polymères d'uréthanne à séquence polybutadiène, composés présentant des propriétés intéressantes dues à leurs chaînes hydrocarbonées hydrophobes, c'est-à-dire excellentes propriétés électriques, faible absorption d'eau, et faible taux de transmission de vapeur humide, se déroule en milieu biphasique. Il en découle alors une hétérogénéité des produits ce qui nuit à leurs propriétés.

L'objectif industriel étant néanmoins de réaliser de telles polycondensations en masse, la présente invention propose aujourd'hui une solution à ce phénomène de macroséparation de phase en introduisant au cours de ces dites polycondensations un agent émulsifiant.

Cet agent émulsifiant est un polymère d'uréthanne obtenu préliminairement, par exemple, en solution homogène, qui dispersé dans l'oligomère α,ω-diol permet de minimiser voire supprimer ce phénomène et en conséquence d'améliorer les propriétés mécaniques ou électriques des compositions de polymère d'uréthanne obtenues selon l'invention.

Les compositions de polymère d'uréthanne obtenues selon l'invention contiennent :
- un oligomère α, ω diol,
- un isocyanate,
- un diol allongeur de chaîne, et
- un agent émulsifiant qui est le produit de réaction entre :

(a) un oligomère α, ω-diol dont la structure de la chaîne est d'une polarité identique ou voisine de celle de l'oligomère α, ω-diol précédent,

(b) un diisocyanate, et éventuellement

(c) un allongeur de chaîne de type diol ou monoalcool tel un polyoxyde d'éthylène monofonctionnel.

Par oligomère α,ω-diol, on comprend les oligomères de type polyester, polyéther, polyoléfine d'origine naturelle ou synthétique et polysiloxane. Parmi ces oligomères, on peut plus particulièrement citer le polyoxyéthylène, le polyoxypropylène, le polyoxytétraméthylène, le polyadipate de butanediol, le polycaprolactone, le polybutadiène, le polyisoprène et le polybutadiène hydrogéné. Ces oligomères ont une masse moléculaire moyenne en nombre comprise entre 600 et 10 000, de préférence entre 2 000 et 4 000 et une fonctionnalité moyenne en nombre Fn (OH) comprise entre 1,4 et 4 et de préférence proche de 2.

Cette fonctionnalité moyenne en nombre Fn (OH) ou nombre moyen d'hydroxyle par chaîne d'oligomère est reliée à la valeur de la masse moyenne en nombre Mn par :

Fn (OH) = ég OH x Mn où éq OH : équivalent OH/kg.

Les isocyanates sont choisis parmi les diisocyanates usuels et de préférence le 2,4 ou 2,6-toluène diisocyanate, le diphénylméthane diisocyanate, l'isophorone diisocyanate et les dérivés de ces produits de fonctionnalité supérieure à 2.

Les diols allongeurs de chaîne sont eux choisis parmi les diols usuels de masse molaire inférieure à 500 et de préférence sont le butanediol 1,4 ou le di β hydroxyéthyl éther d'hydroquinone.

Dans le cas de la composition de l'agent émulsifiant, l'oligomère $\alpha,\omega$-diol choisi est de polarité voisine ou identique à celle de l'oligomère utilisé pour la préparation de la composition de polymère d'uréthanne. Par polarité voisine ou identique, on entend des paramètres de solubilité suffisamment proches, c'est-à-dire une différence entre les paramètres de solubilité n'excédant pas 1 à 2 cal$^{1/2}$ . cm$^{-3/2}$ . mole$^{-1}$.

Le polyoxyde d'éthylène monofonctionnel utilisé éventuellement pour la préparation de l'agent émulsifiant a, lui, une masse moléculaire comprise entre 46 et 5 000 et de préférence entre 250 et 500.

Selon la nature de ces différents constituants, soit l'oligomère $\alpha, \omega$-diol, le diisocyanate, l'allongeur de chaîne et l'émulsifiant et, le rapport de ces divers éléments dans la composition finale, il est possible de réaliser selon l'invention des compositions de polymère d'uréthanne rigides ou souples, présentant des propriétés mécaniques, ou électriques intéressantes.

L'oligomère $\alpha, \omega$-diol, l'isocyanate et le diol allongeur de chaîne peuvent réagir en présence de l'agent émulsifiant avec une stoechiométrie respective comprise entre les formulations 1/2/1 et 1/7/6 et de préférence 1/3/2. Dans le cas d'une stoechiométrie de 1/2/1 qui correspond sensiblement à 80 % de séquences souples, lorsque la masse molaire de l'oligomère$\alpha, \omega$-diol est de l'ordre de 2 000, on obtiendra de préférence une composition de polymère d'uréthanne souple, alors que dans le cas d'une stoechiométrie de 1/7/6, soit 40 % de séquences souples, on obtiendra une composition de polymère d'uréthanne rigide. La stoechiométrie 1/3/2 correspond elle à 30 % de séquence rigide.

Ledit agent émulsifiant est, lui, présent dans ces compositions à une teneur de 1 à 10 % en poids et de préférence de 2 à 5 % en poids.

Cet agent émulsifiant peut en fait être préparé selon deux méthodes. Dans le cas où il est éventuellement composé d'un diol allongeur de chaîne, l'oligomère $\alpha,\omega$-diol, le diisocyanate et donc éventuellement ledit diol allongeur de chaîne réagissent avec une stoechiométrie respective comprise entre les formulations limites 1/1/0 et 1/3/2 et de préférence avec des formulations voisines de 1/1/0 ou 1/2/1. Dans ce cas, l'agent émulsifiant aura la dénomination agent émulsifiant multibloc.

Dans un second cas, il peut être préparé de la même façon à partir d'un oligomère $\alpha,\omega$-diol, et d'un diisocyanate mais cette fois en présence d'un alcool tel le polyoxyde d'éthylène monofonctionnel qui réagissent alors avec une stoechiométrie respective comprise entre 1/2/2 et 1/4/6, et de préférence égale à 1/2/2. Dans ce deuxième cas, l'agent émulsifiant aura la dénomination agent émulsifiant triblocs.

La présence d'un agent émulsifiant multiblocs dans une composition de polymère d'uréthanne selon l'invention améliore plus particulièrement les propriétés diélectriques de celle-ci alors que la présence d'un agent émulsifiant triblocs renforce de préférence la résistance de cette composition aux contraintes mécaniques.

Les propriétés diélectriques de ces compositions de polymère d'uréthanne selon l'invention sont en fait améliorées selon deux critères,
- les pertes diélectriques sont affaiblies et,
- les caractéristiques diélectriques sont conservées jusqu'à 140° C.

Les compositions de polymère d'uréthanne à base d'oligomère $\alpha,\omega$-diol non polaire présentent également des propriétés hydrophobes améliorées. Ainsi, les compositions de polymère d'uréthanne à séquences polybutadiène hydrogéné qui présentent des propriétés intéressantes dues à leur chaîne hydrocarbonée hydrophobe révèlent une faible absorption d'eau et de faibles taux de transmission de vapeur d'eau.

L'invention concerne également un procédé de préparation d'articles en polymère d'uréthanne, caractérisé en ce que :
- on mélange ledit agent émulsifiant à l'oligomère $\alpha,\omega$ diol de façon à obtenir une dispersion de l'agent émulsifiant dans l'oligomère$\alpha,\omega$diol, cette dispersion étant de préférence de l'ordre de 5 %,
- on chauffe ladite dispersion ainsi obtenue avec l'isocyanate puis éventuellement.
- on ajoute à ce mélange le diol allongeur de chaîne de façon à obtenir une composition de polymère d'uréthanne selon l'invention et,
- on réalise la mise en forme de l'article par moulage à chaud de cette composition.

L'agent émulsifiant présent dans la composition de polymère d'uréthanne est lui-même préparé au préalable soit en solution, s'il s'agit d'un agent émulsifiant multiblocs ou en masse s'il s'agit d'un agent émulsifiant triblocs.

Dans le cas d'un agent émulsifiant multiblocs,
- on chauffe ledit oligomère $\alpha,\omega$-diol et ledit diisocyanate,
- le mélange ainsi obtenu est dissous dans un solvant polaire approprié,
- on ajoute éventuellement à cette solution, le diol allongeur de chaîne,et

- l'on chauffe cette solution.

Dans ce cas, le solvant approprié doit en fait être un solvant des trois composés, l'oligomère$\alpha,\omega$-diol, le diisocyanate et le diol allongeur de chaîne. Ainsi, le solvant polaire sera de préférence choisi parmi le THF, le DMF, le Dioxanne et les mélanges de ceux-ci.

La préparation de l'agent émulsifiant peut éventuellement être réalisée en présence d'un catalyseur organométallique. Ce catalyseur est alors introduit dans le mélange à une quantité à 0,01 % en masse totale des réactifs dudit agent émulsifiant, par exemple le dibutyldilaurate d'étain peut jouer le rôle de ce catalyseur.

L'agent émulsifiant triblocs est lui préparé en masse, c'est-à-dire, par chauffage de l'oligomère $\alpha,\omega$-diol avec le diisocyanate, puis par ajout à ce mélange du polyoxyde d'éthylène monofonctionnel et enfin par chauffage de ce dernier mélange.

Plus précisément, les étapes de chauffage impliquées dans les procédés de préparation de compositions de polymère d'uréthanne selon l'invention et des agents émulsifiants sont réalisées sous vide primaire à une température proche de 80°C pendant 2 à 4 heures.

La mise en forme de l'article par moulage à chaud est, elle, effectuée ordinairement à 110°C durant 6 heures.

L'invention se rapporte également aux articles moulés qui sont obtenus à partir d'une composition de polyuréthanne selon l'invention. Ces articles intéressants par leurs propriétés électriques, hydrophobes et mécaniques sont plus particulièrement utiles en tant qu'éléments diélectriques.

D'autres avantages et caractéristiques de l'invention apparaitront à la lecture des exemples suivants, donnés à simple titre d'illustration.

Dans un premier temps, nous proposons un mode opératoire général relatif successivement aux préparations respectives des agents émulsifiants multiblocs ou triblocs, à leurs dispersions dans un oligomère $\alpha,\omega$-diol et enfin à la préparation d'une composition de polymère d'uréthanne.

## 1) Préparation d'un agent émulsifiant multiblocs

L'oligomère $\alpha,\omega$-diol et le diisocyanate sont mélangés à 80°C sous vide primaire pendant 4 heures. Le mélange est dissous dans un solvant polaire à température ambiante (T = 25°C). On ajoute ensuite éventuellement un catalyseur organométallique puis le diol allongeur de chaîne. La solution ainsi obtenue est portée à 60°C pendant 3 heures. On obtient alors l'agent émulsifiant en solution.

## Dispersion d'un agent émulsifiant multiblocs

Elle est obtenue en rajoutant l'oligomère $\alpha,\omega$-diol choisi, à la proportion désirée, dans la solution contenant l'agent émulsifiant. Le solvant est ensuite éliminé par évaporation.

## 2) Préparation de l'agent émulsifiant triblocs

L'oligomère $\alpha,\omega$-diol et le diisocyanate sont mélangés à 80°C sous vide primaire pendant 4 heures. On rajoute du polyoxyde d'éthylène monofonctionnel de masse comprise entre 46 et 5000. Le mélange est agité à 80°C pendant 2 heures. On obtient directement l'agent émulsifiant.

## - Dispersion de l' agent émulsifiant triblocs

La dispersion de cet agent émulsifiant dans l'oligomère $\alpha,\omega$-diol se fait sous agitation mécanique à 80°C.

## 3) Préparation d'une composition de polymère d'uréthanne

Dans un première étape, on ajoute à 80°C sous vide primaire pendant 4 heures, l'isocyanate dans les proportions molaires souhaitées au mélange de l'oligomère $\alpha,\omega$-diol et de l'agent émulsifiant. Le diol allongeur de chaîne est ensuite ajouté dans une seconde étape. L'article en polymère d'uréthanne est alors obtenu après remplissage d'un moule et cuisson à 110°C pendant 6 heures.

### 4) Mesures diélectriques des compositions de polymère d'uréthanne

Les mesures des paramètres diélectriques des échantillons sont effectuées à l'aide de deux ponts "4274.A et 4275.A de HEWLETT-PACKARD" couvrant une gamme de fréquence respectivement de $10^2$ à $10^5$ Hz (basses fréquences) et de $10^5$ à $10^7$ Hz (hautes fréquences). La cellule de mesure (POLYMER LABORATORIES) est du type "condensateur plan". Elle est thermostatée et contrôlée par un régulateur de température piloté par un microordinateur Apple IIe qui permet le stockage des données. Les échantillons sont des films obtenus sous presse. Deux feuilles d'aluminium permettent le contact entre l'échantillon et les électrodes. L'impédance de l'échantillon est considérée comme équivalente à celle d'un circuit constitué par une résistance R et une capacité C montées en parallèle.

On détermine à l'équilibre les valeurs de capacités C et de pertes diélectriques tg

Les valeurs $\rho$, $\epsilon_r'$, $\epsilon_r''$ et tg $\delta$ sont données par les relations :

$$\rho = \frac{S}{G\,e} = \frac{R\,S}{e}$$

$$tg\,\delta = \frac{G}{C\,\omega} = \frac{1}{RC\,\omega}$$

$$\mathcal{E}_r' = \frac{Ce}{\mathcal{E}_o.S} \quad \text{(constante diélectrique relative)}$$

$$\mathcal{E}_r'' = \mathcal{E}_r'.tg\,\delta$$

$\epsilon_r'' = \epsilon_r' \times tg\delta$

où

G : conductance

$\omega$ : pulsation de la fréquence $\omega = 2\pi\epsilon$

S : surface de l'échantillon (ici 9,08 cm$^2$)

e : épaisseur de l'échantillon (ici de 250 à 700 $\mu$m)

Les exemples ci-dessous se rapportent à des compositions de polymère d'uréthanne obtenues selon le mode opératoire général décrit précédemment. Pour certains exemples, les propriétés des compositions ainsi obtenues ont été mises en évidence par des analyses. Les résultats sont alors présentés sous forme de figures ou tableaux.

### EXEMPLE 1

Introduction d'un agent émulsifiant multiblocs dans une composition de polymère d'uréthanne à base de polybutadiène hydrogéné

### Préparation d'un agent émulsifiant de formulation 1/1

44,88 g (1 mole) de polybutadiène hydrogéné de masse 2 000 et de fonctionnalité $\overline{F}n = 1,8$ et 5 g (1 mole) de diphénylméthane diisocyanate en solution dans 500 ml de THF sont chauffés à 60°C pendant 3 heures en présence de 0,005 g de dibutyldilaurate d'étain.

Préparation d'un agent émulsifiant de formulation 1/3/2

44,88 g (1 mole) de polybutadiène hydrogéné de masse 2 000 et 15 g (3 moles) de diphénylméthane diisocyanate sont mélangés à 80° C sous vide primaire pendant 4 heures. Le mélange est ensuite dissous dans 750 ml de THF à température ambiante. On rajoute alors 3,6 g (2 moles) de 1,4-butanediol et 0,006 g de dibuthyldilaurate d'étain. La réaction se poursuit à 60° C pendant 4 heures.

Dispersion des agents émulsifiants

On rajoute aux solutions obtenues précédemment du polybutadiène hydrogéné de façon à obtenir un mélange à 5 % du poids d'agent émulsifiant ce qui correspond, dans le cas de l'agent émulsifiant de formulation 1/1 à 940 g de polybutadiène hydrogéné et dans celui de l'agent émulsifiant de formulation 1/3/2 à 1206 g de polybutadiène hydrogéné. Le solvant est ensuite éliminé par évaporation à 70° C sous un vide de 15 mmHg.

Préparation de la composition de polymère d'uréthanne

La méthode de préparation utilisée sera la même avec ou sans agent émulsifiant et quelque soit le type d'agent émulsifiant choisi.

On ajoute au 1050 g ou 1000 g de polybutadiène hydrogéné, c'est à dire contenant ou non un agent émulsifiant, 334 g ( 3 moles) de diphénylméthane diisocyanate à 80° C pendant 4 heures. On rajoute ensuite le 1,4-butanediol en proportion molaire 2/1 par rapport au polybutadiène hydrogéné soit 80,2 g. Le mélange se fait en réacteur pendant 30 secondes. La composition de polymère d'uréthanne obtenue est ensuite coulée dans un moule où elle subit une cuisson de 6 heures à 110° C.

Les matériaux ainsi obtenus sont homogènes et transparents. Une analyse de distribution des masses molaires montre l'absence de segments rigides isolés.

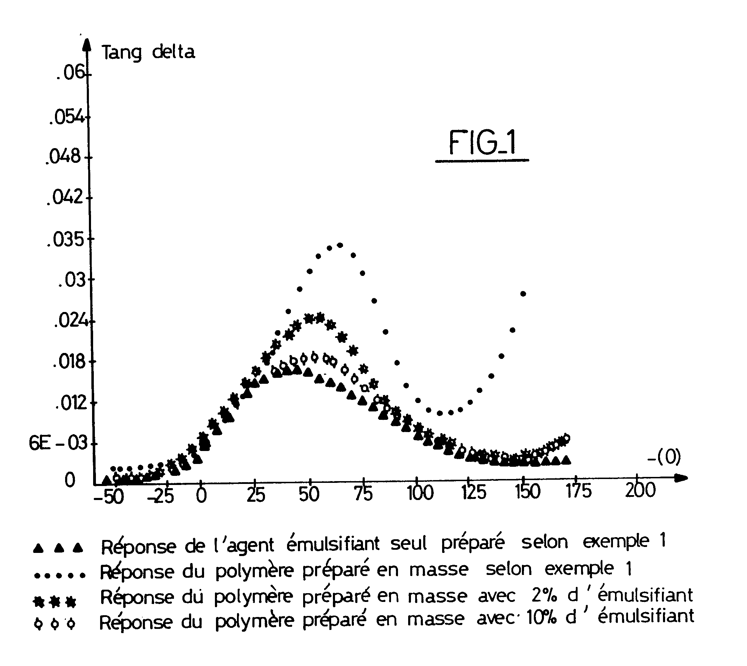

Des mesures diélectriques ont été réalisées sur certains matériaux contenant de tels agents émulsifiants multiblocs. Les résultats obtenus pour chacun d'entre eux sont illustrés par une courbe sur la figure 1. On voit nettement l'amélioration apportée à haute température par l'agent émulsifiant sur une synthèse en masse.

EXEMPLE 2

Introduction d'un agent émulsifiant triblocs dans une composition de polymère d'uréthanne à base de polybutadiène hydrogéné

Préparation de l'agent émulsifiant triblocs

On fait réagir 44,88 g (1 mole) de polybutadiène hydrogéné avec 10 g (2 moles) de diphénylméthane diisocyanate à 80° C pendant 4 heures sous vide primaire. On rajoute ensuite 14 g (2 moles) de polyoxyde d'éthylène monofonctionnel de masse 350. La réaction se poursuit à 120° C pendant 2 heures.

Dispersion de l'agent émulsifiant

On rajoute au mélange obtenu précédemment du polybutadiène hydrogéné de façon à obtenir le pourcentage d'agent émulsifiant triblocs souhaité. Par exemple, pour obtenir une dispersion de l'ordre de 5 % dudit agent émulsifiant 1309 g de polybutadiène hydrogéné sont ajoutés. La dispersion est obtenue par simple agitation mécanique de ce dernier mélange.

Préparation de la composition de polymère d'uréthanne

EP 0 380 389 A1

Elle est réalisée de la même manière que dans l'exemple 1.

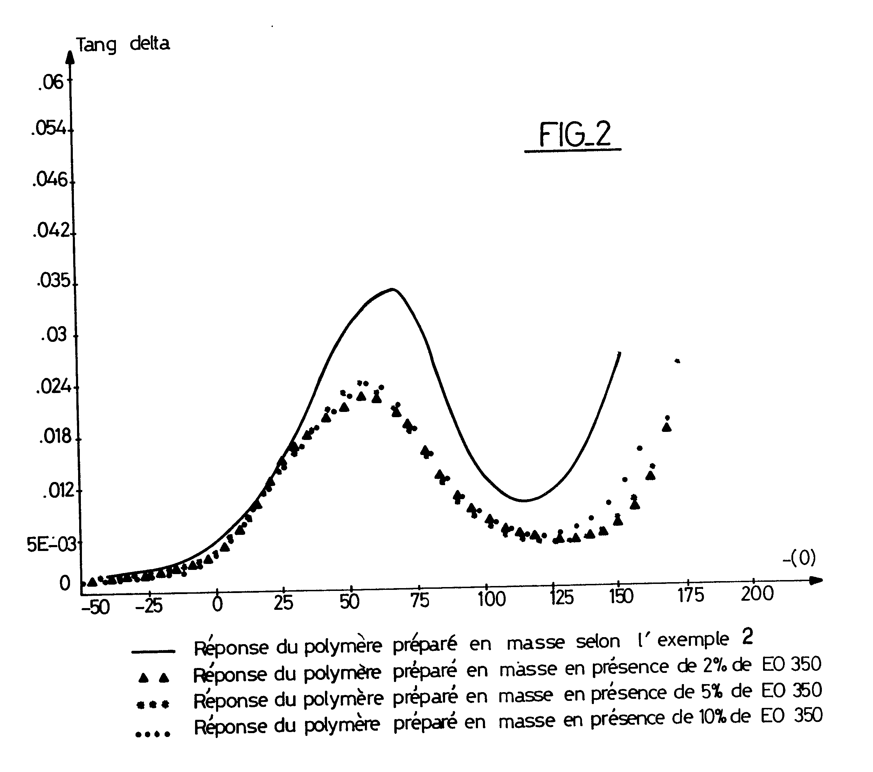

Il a été procédé à des mesures diélectriques sur certains matériaux ainsi obtenus. Les résultats sont représentés graphiquement dans la figure 2. On voit nettement l'amélioration apportée à haute température par l'agent émulsifiant sur une synthèse en masse.

EXEMPLE 3

Introduction d'un agent émulsifiant multiblocs à 2 % dans une composition de polymère d'uréthanne à base de polycaprolactone.

Préparation de l'agent émulsifiant

40 g (1 mole) de polycaprolactone de masse 2000 et de fonctionnalité $\overline{F}n$ = 2 sont mélangés à 15 g (3 moles) de diphénylméthane diisocyanate et chauffés à 80° C pendant 4 heures.

On ajoute ensuite 3,6 g (2 moles) de 1,4- butanediol, 0,005 g de catalyseur dibutyldilaurate d'étain et 1 litre de THF à 25° C. On porte le mélange à 60° C pendant 3 heures.

Dispersion de l'agent émulsifiant

La dispersion de l'agent émulsifiant est réalisée en ajoutant au mélange 5 litres de solvant et 2871 g de polycaprolactone. Le solvant est ensuite éliminé par évaporation à 70° C sous une pression de 15 mmHg.

Préparation de la composition de polymère d'uréthanne

On fait réagir 0,76 mole de polycaprolactone soit, 760 g de polycaprolactone et 20 g d'agent émulsifiant multiblocs, avec 3 moles (375g) de diphénylméthane diisocyanate à 80° C pendant 4 heures. On mélange en machine de coulée basse pression le mélange ainsi obtenu avec un second mélange constitué de 240 g de polycaprolactone et 90 g de 1,4-butanediol.

La composition de polymère d'uréthanne obtenue est ensuite coulée dans un moule où elle subit une cuisson de 6 heures à 110° C.

Les propriétés mécaniques statiques de ce matériau ont été testées. Les résultats figurent dans le tableau 1.

TABLEAU I

| Propriétés mécaniques statiques de PU à séquence souple PCL. Influence de l'agent émulsifiant multiblocs | | |
|---|---|---|
| ESSAI | CONTRAINTE A LA RUPTURE $\tau r$ (MPa) | ALLONGEMENT A LA RUPTURE $\epsilon r$ (%) |
| sans agent émulsifiant | 38,2 | 410 ± 10 |
| 2 % agent émulsifiant | 43,4 | 430 ± 10 |

Les essais de traction uniaxiale ont été effectués à 5 mm.min$^{-1}$ sur des éprouvettes de type H3.

**Revendications**

1. Composition de polymère d'uréthanne, caractérisée en ce qu'elle contient :
- un oligomère $\alpha,\omega$ -diol,
- un isocyanate,

7

- un diol allongeur de chaîne, et
- un agent émulsifiant qui est le produit de réaction entre :

    (a ) un oligomère $\alpha$, $\omega$-diol dont la structure de la chaîne est d'une polarité identique ou voisine de celle de l'oligomère $\alpha,\omega$ -diol précédent,

    (b) un diisocyanate, et éventuellement

    (c) un allongeur de chaîne de type diol ou monoalcool tel un polyoxyde d'éthylène monofonctionnel.

2. Composition de polymère d'uréthanne selon la revendication 1, caractérisée en ce que l'oligomère $\alpha,\omega$ -diol est à base de polyoléfine d'origine synthétique tel que le polybutadiène, le polybutadiène hydrogéné, de polyoléfine d'origine naturelle tel que l' huile de ricin, de polysiloxanne, de polyéther ou de polyester.

3. Composition de polymère d'uréthanne selon les revendications 1 et 2, caractérisée en ce que l'oligomère $\alpha,\omega$-diol est de type non polaire tel que les polyoléfines d'origine synthétique en particulier le polybutadiène, le polyisoprène, le polybutadiène hydrogéné, les polyoléfines d'origine naturelle en particulier l' huile de ricin ou les polysiloxannes.

4. Composition de polymère d'uréthanne selon les revendications 1 à 3, caractérisée en ce que ledit oligomère $\alpha,\omega$ -diol a une masse moléculaire moyenne en nombre comprise entre 600 et 10 000 et de préférence entre 2 000 et 4 000 et une fonctionnalité moyenne en nombre Fn (OH) comprise entre 1,6 et 4 et de préférence proche de 2.

5. Composition de polymère d'uréthanne selon l'une des revendications 1 à 4, caractérisée en ce que l' isocyanate est choisi parmi les diisocyanates usuels et de préférence le 2,4- ou 2,6-toluène diisocyanate, le diphénylméthane diisocyanate et les dérivés de ces produits de fonctionnalité supérieure à 2.

6. Composition de polymère d'uréthanne selon l'une des revendications 1 à 5, caractérisée en ce que ledit diol allongeur de chaîne est choisi parmi les diols usuels de masse molaire inférieure à 500 et de préférence le di -$\beta$ hydroxy éthyl éther d'hydroquinone et le butanediol.

7. Composition de polymère d'uréthanne selon l'une des revendications 1 à 6, caractérisée en ce que ledit oligomère $\alpha,\omega$-diol, ledit isocyanate et ledit diol allongeur de chaîne réagissent, en présence de l'agent émulsifiant, avec une stoechiométrie respective comprise entre les formulations 1/2/1 et 1/7/6 et de préférence avec une stoechiométrie voisine de 1/3/2.

8. Composition de polymère d'uréthanne selon l'une des revendications 1 à 7, caractérisée en ce que le polyoxyde d'éthylène monofonctionnel a une masse molaire comprise entre 46 et 5000 et de préférence entre 250 et 500.

9. Composition de polymère d'uréthanne selon l'une des revendications 1 à 8, caractérisée en ce que ledit agent émulsifiant est présent à une teneur de 1 à 10 % en poids et de préférence de 2 à 5 % en poids.

10. Composition de polymère d'uréthanne selon l'une des revendications 1 à 9, caractérisée en ce que ledit oligomère$\alpha,\omega$- diol, ledit diisocyanate et éventuellement ledit diol allongeur de chaîne réagissent avec une stoechiométrie respective comprise entre les formulations limites 1/1/0 et 1/3/2, et de préférence avec des formulations voisines de 1/1/0 ou 1/2/1.

11. Composition de polymère d'uréthanne selon l'une des revendications 1 à 9, caractérisée en ce que ledit oligomère $\alpha,\omega$-diol, le diisocyanate et le polyoxyde d'éthylène monofonctionnel réagissent avec une stoechiométrie comprise entre 1/2/2 et 1/4/6 et de préférence proche de 1/2/2.

12. Procédé de préparation d'articles en polymère d'uréthanne selon l'une des revendications 1 à 11, caractérisé en ce que :

- on mélange l'agent émulsifiant audit oligomère $\alpha,\omega$ -diol de façon à obtenir une dispersion de l'agent émulsifiant dans l'oligomère $\alpha,\omega$-diol,
- on chauffe ladite dispersion avec ledit isocyanate puis éventuellement,
- on ajoute au mélange ainsi obtenu ledit diol allongeur de chaîne de façon à obtenir une composition selon l'une des revendications 1 à 11 et,
- on réalise la mise en forme de l'article par moulage à chaud de cette composition.

13. Procédé selon la revendication 12, caractérisé en ce que l'agent émulsifiant n'est initialement dispersé que dans une partie de l'oligomère $\alpha,\omega$ -diol, la partie restante de ce dernier étant introduite au cours de l'étape ultérieure de chauffage avec ledit isocyanate.

14. Procédé de préparation d'articles en polymère d'uréthanne, selon la revendication 12 ou 13, caractérisé en ce que l'émulsifiant est préparé en solution :

- en chauffant ledit oligomère $\alpha,\omega$ -diol mélangé audit diisocyanate,
- en dissolvant le mélange ainsi obtenu dans un solvant polaire à 25° C,
- en ajoutant à cette solution, le diol allongeur de chaîne, et
- en chauffant la solution ainsi obtenue.

15. Procédé de préparation d'articles en polymère d'uréthanne, selon la revendication 12 ou 13, caractérisé en ce que l'émulsifiant est préparé en masse :
- en chauffant ledit diisocyanate et l'oligomère$\alpha,\omega$ -diol,
- en ajoutant au mélange ainsi obtenu ledit polyoxyde d'éthylène monofonctionnel et,
- en chauffant ce dernier mélange.

16. Procédé de préparation d'articles en polymère d'uréthanne selon la revendication 14, caractérisé en ce qu'on mélange l'agent émulsifiant audit oligomère $\alpha,\omega$ -diol de façon à obtenir une dispersion de l'agent émulsifiant à 5 % en poids dans l'oligomère $\alpha,\omega$ -diol.

17. Procédé de préparation d'articles en polymère d'uréthanne selon la revendication 14, caractérisé en ce que le solvant polaire est choisi parmi le Dioxanne, le D.M.F., le T.H.F. et leurs mélanges.

18. Procédé de préparation d'articles en polymère d'uréthanne selon la revendication 14, caractérisé en ce qu'un catalyseur organométallique peut être introduit dans la préparation dudit agent émulsifiant.

19. Procédé de préparation d'articles en polymère d'uréthanne selon la revendication 18, caractérisé en ce que la quantité dudit catalyseur utilisée pour préparer l'agent émulsifiant correspond à 0,01 % en masse de la masse totale des réactifs de l'agent émulsifiant.

20. Articles moulés, caractérisés en ce qu'ils sont obtenus à partir d'une composition de polymère d'uréthanne selon l'une des revendication 1 à 11.

21. Articles moulés selon la revendication 19, caractérisés en ce qu'ils sont utilisés comme éléments diélectriques.

FIG.1

▲ ▲ ▲  Réponse de l'agent émulsifiant seul préparé selon exemple 1
• • • • •  Réponse du polymère préparé en masse selon exemple 1
✽ ✽ ✽  Réponse du polymère préparé en masse avec 2% d'émulsifiant
◊ ◊ ◊  Réponse du polymère préparé en masse avec 10% d'émulsifiant

EP 0 380 389 A1

FIG_2

Tang delta

−(0)

—— Réponse du polymère préparé en masse selon l'exemple 2

▲ ▲ Réponse du polymère préparé en masse en présence de 2% de EO 350

• • • Réponse du polymère préparé en masse en présence de 5% de EO 350

•••• Réponse du polymère préparé en masse en présence de 10% de EO 350

EP 0 380 389 A1

# RAPPORT DE RECHERCHE EUROPEENNE

Office européen des brevets

Numero de la demande

EP 90 40 0130

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 116 172 (MOBAY)<br>* le document en entier *<br>--- | 1-7,9-<br>11,15 | C 08 G 18/65 |
| A | US-A-4 485 032 (F. OLSTOWSKI et al.)<br>* colonne 1, lignes 6-19; colonne 1,<br>ligne 67 - colonne 2, ligne 8; exemple<br>2 *<br>--- | 1,12,18<br>-20 | |
| A | FR-A-2 344 583 (RHONE-POULENC)<br>* page 2, ligne 22 - page 3, ligne 17;<br>exemple 3; revendication 1 *<br>----- | 1,12,20 | |

DOMAINES TECHNIQUES RECHERCHES (Int. Cl.5)

C 08 G
C 08 L

Le présent rapport a été établi pour toutes les revendications

| Lieu de la recherche | Date d'achèvement de la recherche | Examinateur |
|---|---|---|
| BERLIN | 11-04-1990 | HOEPFNER W.W.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)